# EUROPÄISCHE PATENTSCHRIFT

(11) **EP 1 694 048 B1**
(45) Veröffentlichungstag und Bekanntmachung des Hinweises auf die Patenterteilung: **09.01.2013**
(21) Anmeldenummer: 06001005.5
(22) Anmeldetag: 18.01.2006
(51) Int. Cl.: H04N 1/028, G01J 3/10

(54) **Farbmessgerät und Messverfahren für das Gerät**
Colour measuring device and measuring method therefor
Colorimètre et procédé de mesure destiné à celui-ci

(30) Priorität: 16.02.2005 CH 2642005; 28.02.2005 CH 3412005
(43) Veröffentlichungstag der Anmeldung: 23.08.2006
(73) Patentinhaber: X-Rite Europe GmbH, 8105 Regensdorf (CH)
(72) Erfinder: von Orelli, Adrian, 8008 Zürich (CH); Frick, Beat, 8107 Buchs (CH)
(74) Vertreter: Schwabe - Sandmair - Marx

(56) Entgegenhaltungen:
- EP-A- 0 764 836
- EP-A- 1 314 972
- DE-A1- 19 650 223
- ZWINKELS J C: "Colour-measuring instruments and their calibration" DISPLAYS, ELSEVIER SCIENCE PUBLISHERS BV., BARKING, GB, Bd. 16, Nr. 4, Mai 1996 (1996-05), Seiten 163-171, XP004032518 ISSN: 0141-9382

## Beschreibung

Die Erfindung betrifft ein Farbmessgerät, speziell ein Spektralfotometer, gemäss dem Oberbegriff des unabhängigen Anspruchs 1 sowie ein Messverfahren für ein solches Messgerät gemäss dem Oberbegriff des unabhängigen Anspruchs 11.

In zahlreichen Einsatzfällen eines Farbmessgeräts, speziell eines Spektralfotometers, z.B. für die Messung eines Druckbogens, muss die Abtastung kontaktlos erfolgen. Die Auflagefläche des Bogens ist über die relativ grosse Bogenfläche in der Regel nicht perfekt eben. Es treten deshalb beim Einmessen Abstandsänderungen auf. Diese dürfen die Messwerte nicht beeinflussen. Dies erfordert, dass die Beleuchtungs- und die Messlicht-Aufpickanordnung des Messgeräts über den tolerierten Bereich von ein paar Zehntelmillimeter abstandsunabhängig sein müssen.

Das Sichtfeld der Messlicht-Aufpickanordnung wird von der Beleuchtung normalerweise überleuchtet. Da die Erfassungswinkel der Aufpickanordnung meistens sehr eingeschränkt sind (gemäss den Farbmessnormen sind nur Erfassungswinkel von +/-5° tolerierbar), wird damit die Leucht- oder Strahldichte im Messfeld gemessen, welche unabhängig vom Abstand ist. Es muss also nur die Beleuchtungsanordnung des Messgeräts eine konstante, vom Abstand unabhängige Bestrahlungsstärke erzeugen.

Eine geeignete Lösung für eine in vielen Einsatzfällen ausreichend abstandsunabhängige Beleuchtung unter 45° ist in der EP-A 1 507 134 (entsprechend US-Patentanmeldung Ser.No. 10/894797 vom 20.07.2004) beschrieben. Dabei ist eine Strahlungsquelle mit Lambertscher Abstrahlcharakteristik parallel zur Ebene des Messfelds angeordnet. Die Position der Strahlungsquelle relativ zum Messfeld ist so gewählt, dass das Licht im Winkel von 45° auf das Messfeld trifft. Gemäss dem photometrischen Grundgesetz wird so eine Abstandsunempfindlichkeit über einen für die Praxis ausreichend grossen Abstandsvariationsbereich realisiert.

Kontaktloses Messen mit unterschiedlichen Abständen und Winkeln zwischen der Messanordnung und dem Messobjekt ist von Interesse z.B. bei der Prozesskontrolle und/oder Regelung der farblichen oder spektralen Eigenschaften bei der Herstellung von Materialien wie Papier, Folien, Keramik, Stoff, Plastik, Leder etc., welche am Band hergestellt werden. Es ist ferner von Interesse bei Messgeräten, die dazu ausgelegt sind, ein- oder zweidimensionale Farbtestkarten auszumessen, und bei Spektral-oder Farbsensoren, die zur Kontrolle oder Regelung der Farbe in Maschinen, welche zum Bedrucken von Materialien verwendet werden, eingesetzt werden. Kontaktlose Messung ist immer dann erforderlich, wenn das Messobjekt auf der zu messenden Oberfläche nicht berührt werden darf, z.B. weil Druckfarbe noch feucht ist oder weil die Oberfläche empfindlich ist. Kontaktlose Messung ist immer dann von technischem Vorteil, wenn dadurch die Konstruktion vereinfacht werden kann. Kontaktlose Messung ist auch von technischem Vorteil, weil dabei verschiedene Substratdicken (z.B. verschiedene Papierqualitäten) und auch unebene Substrate (z.B. texturierte Folien) gemessen werden können.

Bei kontaktloser Messung von Farben auf Substraten, zum Beispiel mittels einer Messanordnung mit 45°/0°-Normmessgeometrie, führt eine Abweichung vom nominellen Abstand und Winkel zwischen Messanordnung und Messobjekt (Substrat) zu verfälschten Messresultaten. Die Hauptfehlerkomponente ist die Änderung der Beleuchtungsstärke auf dem Substrat und damit der gemessenen Änderung der reemittierten Lichtmenge. Da die Weisskalibration der Messanordnung in der Anwendung üblicherweise auf einer internen oder externen Hell- oder Weissreferenz unter Normalbedingungen (das heisst unter nominellem Abstand und Winkel zwischen Messobjekt und Messanordnung) stattfindet, ergeben sich bei der Berechnung der Reemission des Substrates Fehler - im wesentlichen in der Helligkeit (L), aber auch - meist in geringerem Mass - im Farbort (a, b). Eine Änderung der Beleuchtungsstärke auf dem Messobjekt bei einer Höhen- oder Winkeländerung resultiert aus der Änderung der Distanz zwischen Beleuchtungslichtquelle und dem Messobjekt, bei einfacheren Beleuchtungsanordnungen ist das sogar der dominante Fehler (Beleuchtungsstärke ist proportional dem Abstandsquadrat). Eine Änderung der Beleuchtungsstärke auf dem Messobjekt bei einer Höhen- oder Winkeländerung resultiert ferner aus der Änderung der auftretenden Beleuchtungswinkel auf dem Messobjekt. Je einfacher der Aufbau der Messoptik, desto grösser ist dieser Anteil. Eine Änderung des Spektrums der Beleuchtung bei einer Höhen- oder Winkeländerung tritt dann auf, wenn das Beleuchtungssystem das Messobjekt spektral nicht exakt homogen beleuchtet. Dieser Anteil kann gross sein, wenn die Beleuchtungslichtquelle unter verschiedenen Winkeln spektral unterschiedlich abstrahlt, was insbesondere bei Lichtquellen in Form von weissen Leuchtdioden vorkommt. Eine Änderung der Empfindlichkeit des Messkanals (Aufpick-Kanals) tritt dadurch auf, dass bei einer Änderung von Höhe oder Winkel sich der beobachtete Messfleck in Grösse und Form ändert.

Bei Messungen an unterschiedlich dicken bedruckten Materialien (Messobjekten) ist es heute üblich, die durch unterschiedliche Dicken des bedruckten Materials hervorgerufenen unterschiedlichen Abstände zwischen Messfläche und Messanordnung durch Relativ-Messung zu eliminieren. Das heisst, die Messwerte werden auf das Signal vom Grundssubstrat im gegebenen Abstand bezogen (z.B. auf das Weiss des zu bedruckenden Papiers.) Das Messresultat wird so zwar unabhängig vom Abstand, ist aber abhängig vom verwendeten Substrat und somit nicht mehr direkt vergleichbar zu Messwerten, welchen andere Substrat-Materialien zugrunde liegen.

Die EP 1 314 972 A1 beschreibt ein Spektralphotometer und die Verwendung desselben. Das Spektralphotometer umfasst einen optischen Messkopf, ein Spektrometer und eine Steuerelektronik. Der Messkopf ist mit einer mehrkanaligen Beleuchtungsanordnung ausgestattet, die als spektral kontinuierliche Lichtquelle ausschließlich Leuchtdioden enthält. Jeder Beleuchtungskanal enthält eine Leuchtdiode, wobei jede Leuchtdiode separat ansteuerbar ist. Der Messkopf enthält ferner einen vorzugsweise telezentrisch ausgelegten Sammelkanal zur Erfassung des von der Probe remittierten oder emittierten Messlichts und zur Einkopplung desselben in das Spektrometer. Die Beleuchtungskanäle sind ringförmig um die optische Achse des Messkopfs angeordnet und beleuchten die Probe unter verschiedenen Einfallswinkeln. Der Messkopf enthält mindestens eine weiß abstrahlende Leuchtdiode und zusätzlich noch Leuchtdioden mit unterschiedlichen Emissionsspektren sowie auch UV-Leuchtdioden. In Kombination mit der Steuerelektronik ist dadurch eine Beleuchtung mit elektronisch einstellbarer Spektralcharakteristik realisiert. Für eine kontaktlose Messung sind Mittel zur Bestimmung der Messdistanz und eine distanzabhängige numerische Korrektur der Messwerte vorgesehen.

### ZUSAMMENFASSUNG DER ERFINDUNG

Durch die vorliegende Erfindung soll nun ein Farbmessgerät, speziell ein Spektralfotometer, der gattungsgemäßen Art hinsichtlich Abstands- und Winkelunabhängigkeit und damit bezüglich Leistungsfähigkeit, Präzision und Universalität der Einsatzmöglichkeiten verbessert werden. Ferner soll ein Messverfahren für ein solches Farbmessgerät geschaffen werden, welches zu abstands- und winkelunabhängigen Messresultaten führt.

Diese der Erfindung zugrundeliegende Aufgabe wird durch das durch die Merkmale des unabhängigen Anspruchs 1 gekennzeichnete erfindungsgemäße Farbmessgerät bzw. das durch die Merkmale des unabhängigen Anspruchs 10 gekennzeichnete erfindungsgemäße Messverfahren gelöst.

Vorteilhafte Ausgestattungen und Weiterbildungen des erfindungsgemäßen Farbmessgeräts und des erfindungsgemäßen Messverfahrens sind Gegenstand der abhängigen Ansprüche.

Im folgenden wird die Erfindung anhand der Zeichnung näher erläutert. Es zeigen:
- Fig. 1a-1d: ein Farbmessgerät in vier typischen Messituationen bei seiner Eichung,
- Fig. 2a-2d: das Farbmessgerät in vier typischen Messsituationen im praktischen Messeinsatz,
- Fig. 3: ein Schema der wichtigsten Steuerungskomponenten des Messgeräts,
- Fig. 4: ein Blockschema des erfindungsgemässen Messverfahrens,
- Fig. 5a-5b: zwei Skizzen zur Erläuterung einer Abstandsmessung und
- Fig. 6a-6c: drei in verschiedenen Situationen bei der Abstandsmessung typischerweise anfallende Messsignalverläufe.

Die wesentlichste Grundidee der Erfindung besteht in einer Eichung des Farbmessgeräts, speziell Spektralfotometers auf unterschiedliche Messobjekt-Abstände (Höhen) und Winkel. Dazu wird bei der Produktion des Farbgeräts, genauer bei dessen Eichung, während der die spezifischen Eigenschaften von jedem produzierten Messgerät ermittelt werden, ein zusätzlicher Schritt eingeführt, bei welchem die Abstands-und/oder Winkelabhängigkeit jedes hergestellten Messgeräts ausgemessen wird.

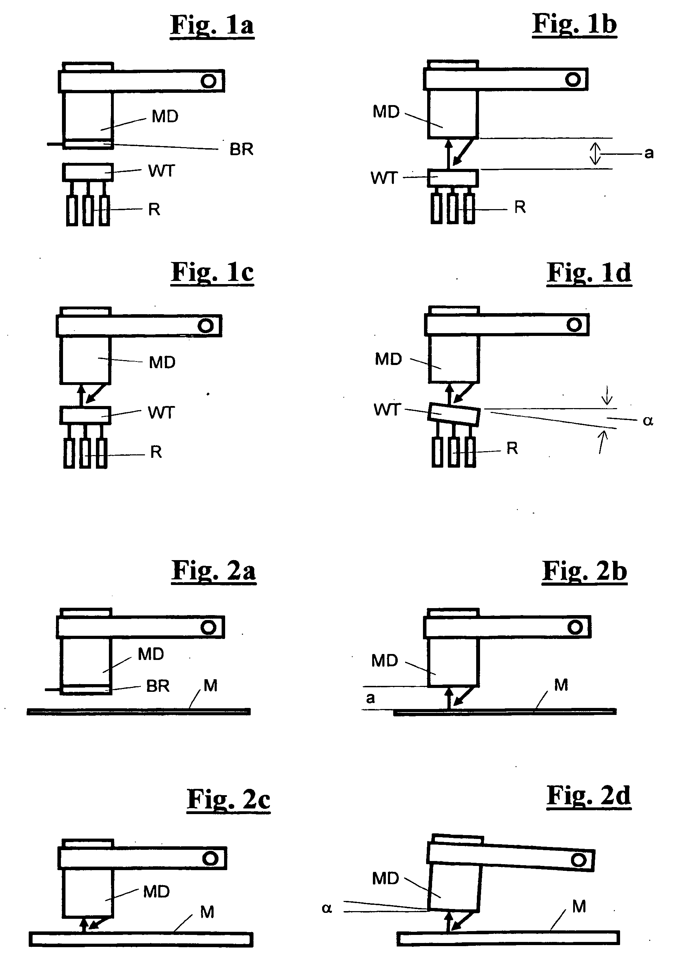

Diese Eichmessungen können z.B. so geschehen, dass eine Referenz-Probe (Referenz-Messobjekt), vorzugsweise eine sehr genau ausgemessene Weisskachel, in unterschiedlichen Abständen und/oder Winkeln zum Messgerät ausgemessen wird und die zugehörigen Messdaten im Messgerät gespeichert werden (absolute Weisskalibration). Die Figuren 1a-1d illustrieren dies. Das Farbmessgerät ist mit MD bezeichnet. Das Referenz-Messobjekt ist mit WT bezeichnet und wird über einen hier nur durch drei verstellbare Stützorgane R symbolisierten Messroboter in unterschiedlichen Abständen und Winkellagen relativ zum Farbmessgerät MD positioniert. Die relative Weisskalibration des Farbmessgeräts erfolgt mittels einer im Messgerät eingebauten internen Weissreferenz, die in Fig. 1a in aktiviertem, d.h. in den Messstrahlengang eingebrachtem Zustand dargestellt und mit BR bezeichnet ist.

Konkret wird die absolute Weisskalibration des Sensors in der Fertigung nicht nur exakt auf Nominalabstand und Nominalwinkel durchgeführt, sondern gemäss der Erfindung für ein Set von unterschiedlichen Abständen (Höhen) a und unterschiedlichen Winkeln α, wobei ein ganzes Daten-Set von Kalibrationsdaten C3 resultiert, die je typisch aus einem Weisswert für jede Farbe oder jeden Spektralbereich (im einfachsten Fall ein eindimensionaler Vektor) bestehen. Das Kalibrationsdaten-Set C3 wird in Zuordnung zu den zugrundeliegenden Abstands- und Winkeldaten vorzugsweise im Messgerät MD bzw. dessen Steuerung gespeichert.

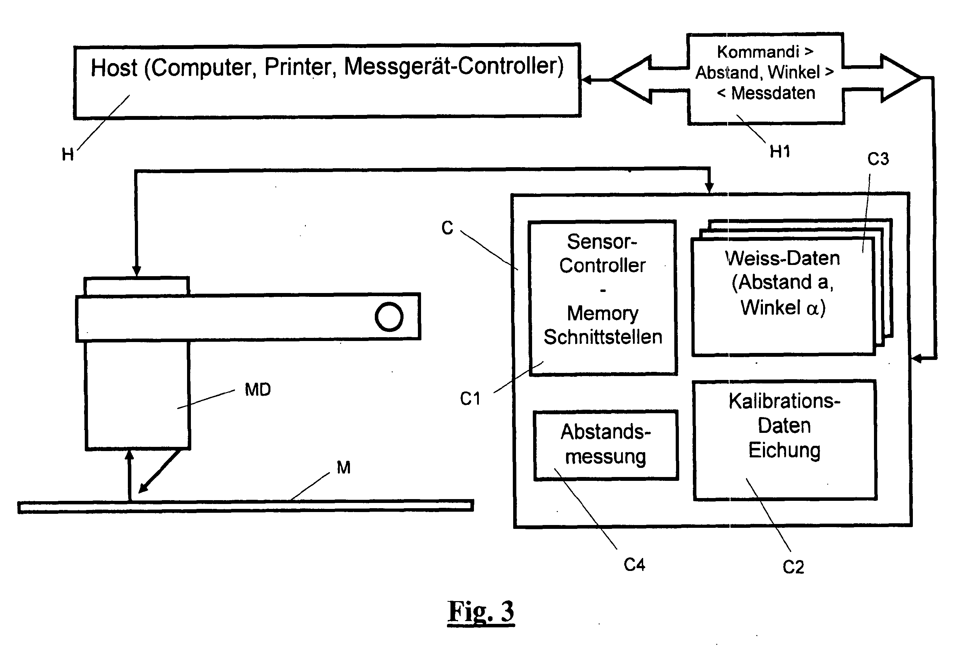

Die Fig. 3 zeigt ein Prinzipschema des so erweiterten und verbesserten Farbmessgeräts, speziell Spektralfotometers. Dargestellt sind das Farbmessgerät MD und die typischerweise prozessor-basierte Steuerung C desselben. Die Steuerung C enthält zusätzlich zu den in jedem modernen Farbmessgerät vorhandenen Steuerungseinheiten C 1 (Ansteuerung der Lichtquellen, Ansteuerung der fotoelektrischen Empfänger, ....) und den konventionellen Eich- und Kalibrationsdaten C2 noch den schon erwähnten Satz von abstands- und winkelabhängigen Kalibrationsdaten C3. Ausserdem kann die Steuerung C noch über nicht dargestellte Schnittstellen in konventioneller Weise mit einer übergeordneten Steuerung H kommunizieren, z.B. von dieser Befehle und Steuerungsdaten H1 entgegennehmen oder Messdaten an die Steuerung H senden.

Die Figuren 2a-d zeigen das Farbmessgerät im praktischen Messeinsatz in vier verschiedenen Situationen. In Fig. 2a ist die interne Weissreferenz BR für den relativen Weissabgleich aktiviert. In Fig. 2b befindet sich die Messebene M im nominellen Abstand a zum Farbmessgerät MD. In Fig. 2c ist der Abstand kleiner als der nominelle Abstand, und in Fig. 2d ist das Messgerät bzw. sein Messkopf gegenüber der Messebene M um einen kleinen Winkel α gekippt.

Für den praktischen Einsatz des Farbmessgeräts in einer (nicht dargestellten) Anwendungseinrichtung (z.B. einem Drucker) sind zwei Fälle zu unterscheiden: 1. Abstand und/oder Winkel des Messobjekts relativ zum Farbmessgerät sind bekannt (z.B. durch Kenntnis der verwendeten Papiersorte in einem Drucker) und 2. Abstand und/oder Winkel sind nicht bekannt.

Im ersten Fall wird dem Farbmessgerät der Abstand und/oder Winkel zum zu messenden Substrat in geeigneter Form mitgeteilt. Dies kann z.B. mittels eines Kommandos H1 der übergeordneten Steuerung H (Fig. 3) über die Kommunikationsschnittstelle des Farbmessgeräts bzw. dessen Steuerung C geschehen. Im beispielsweisen konkreten Einsatzfall des Farbmessgeräts in einer Druckmaschine teilt letztere dem Farbmessgerät Abstand und/oder Winkel mit.

Anhand der durch die im Farbmessgerät zuvor gespeicherten Kalibrationsdaten-Sets C3 gegebenen Kenntnis der Abstands- und Winkelabhängigkeit und der mitgeteilten aktuell vorliegenden Orientierung (Abstand a, Winkel α) zwischen Farbmessgerät MD und Messobjekt wird die Helligkeit des farbmetrischen Messresultates (oder bei einem Spektralfotometer das Signal des spektralen Messresultates) korrigiert. Konkret wird dabei zur Berechnung der Messdaten (Remissionspektrum oder diskrete Remissionswerte je Farbintervall) der jeweils passende Weissvektor verwendet, also derjenige abgespeicherte Weissvektor C3, der bei demselben Abstand a und bei demselben Winkel α bei der ursprünglichen Eichung bestimmt wurde. Bei nicht abgespeicherten Abstands- und Winkelwerten wird zwischen den zu den nächstliegenden Abstands- und Winkelwerten gehörenden Weissvektoren z. B. bilinear interpoliert oder extrapoliert.

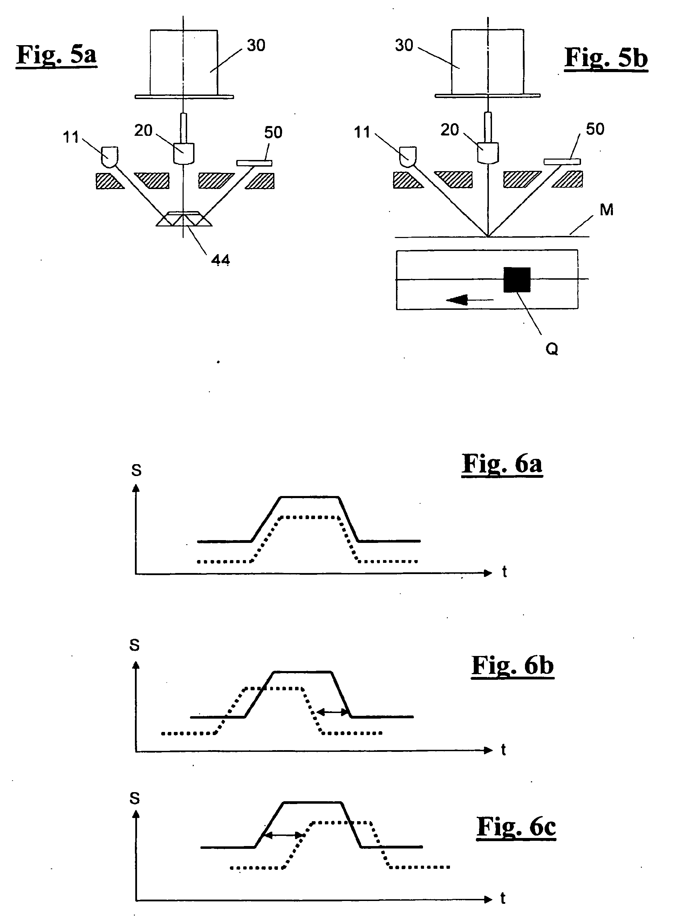

Falls dem Farbmessgerät nicht mitgeteilt werden kann, unter welchen geometrischen Bedingungen die Messung erfolgen wird (Einsatzfall 2), wird das Farbmessgerät gemäss der Erfindung um eine zusätzliche Funktion C4 (Fig. 3) erweitert, die es gestattet, die fehlende Information selbst zu ermitteln. Die Abstandsmessung kann z.B. durch Triangulation mit Hilfe einer zusätzlichen Optik erfolgen. Besonders zweckmässig und vorteilhaft ist gemäss einem weiteren Gedanken der Erfindung aber eine Vorgehensweise, welche die Signale zweier verschiedener Messkanäle des Farbmessgeräts zeitlich korreliert und daraus eine Abstandsinformation gewinnt. Moderne Spektralfotometer, z.B. das in der EP-A 1 507 134 (entsprechend US-Patentanmeldung Ser.No. 10/894797 vom 20.07.2004) beschriebene, weisen neben dem spektralen Messkanal oft noch einen separaten, für Glanz-Messungen bestimmten Reflex-Kanal auf. Wenn ein zusätzlicher Messkanal, speziell ein solcher Reflex-Kanal vorhanden ist, kann dieser für die erfindungsgemässe Abstandsbestimmung herangezogen werden, so dass dann keine zusätzlichen optischen Komponenten erforderlich sind. Die erfindungsgemässe Abstandsmessung wird im folgenden anhand der Figuren 5a-5b und 6a-6c näher erläutert.

Die Fig. 5a zeigt stark schematisiert das hier als Spektralfotometer ausgebildete Farbmessgerät während der relativen Hellkalibrierung mittels der schon erwähnten, in den Strahlengang eingeschobenen Hellreferenz 44. In Fig. 5b ist das Spektralfotometer zur Messung eines in der Messebene M befindlichen Messobjekts bereit. Das Spektralfotometer weist eine durch eine Leuchtdiode 11 symbolisierte Beleuchtung, eine Messlicht-Aufpickoptik 20, eine Spektrometeranordnung 30 und einen zusätzlichen Fotoempfänger 50 auf. Die Aufpickoptik 20 bildet zusammen mit der Spektrometeranordnung 30 den spektralen Messkanal, der zusätzliche Fotoempfänger 50 stellt den für Glanzmessungen bestimmten Reflex-Kanal dar.

Zur Erzeugung der Abstandsinformation wird das Spektralfotometer (bzw. allgemein das Farbmessgerät) linear und parallel über dem auf der Messebene M befindlichen Messobjekt (z.B. Papier) verschoben oder das Messobjekt wird unter dem Spektralfotometer verschoben. Auf dem Messobjekt ist ein Muster z.B. in Form eines schwarzen Quadrats Q (Fig. 5b) angebracht, z.B. aufgedruckt. (Als Muster wird zweckmässig ein passendes Feld des auszumessenden Objekts verwendet.) Dieses Muster Q wird von den beiden Messkanälen (Spektralkanal 20,30 und Reflexkanal 50) in Funktion des Abstandes zwischen Messgerät und Messobjektoberfläche zu unterschiedlichen Zeitpunkten erkannt. Die Figuren 6a-6c zeigen die Messsignalverläufe der beiden Messkanäle in drei verschiedenen Situationen. Die ausgezogenen Linien stellen die Signalverläufe des Spektralkanals dar, die gestrichelten Linien diejenigen des Reflexkanals. In Fig. 6a befindet sich das Messobjekt bzw. dessen abgetastete Oberfläche in nominellem Abstand zum Farbmessgerät, in den Figuren 6b und 6c in kleinerem bzw. grösserem Abstand. Die Phasenverschiebung der Signalverläufe der beiden Kanäle bildet ein Mass für den Abstand zwischen Farbmessgerät und Messobjekt und wird in einem weiteren Steuerungsmodul C4 der Steuerung C des Farbmessgeräts bzw. Spektralfotometers ermittelt und in entsprechende Abstandsdaten umgerechnet (Fig. 3). Diese Abstandsdaten werden dann wiederum zur Auswahl bzw. Berechnung (Interpolation, Extrapolation) des zugeordneten Weiss-Vektors in den abgespeicherten Kalibrationsdaten C3 herangezogen.

Es versteht sich, dass die Bestimmung des Abstands zum Messobjekt auch mit anderen Mitteln und Messmethoden erfolgen kann, z.B. mittels mechanischer oder kapazitiver Abstandssensoren.

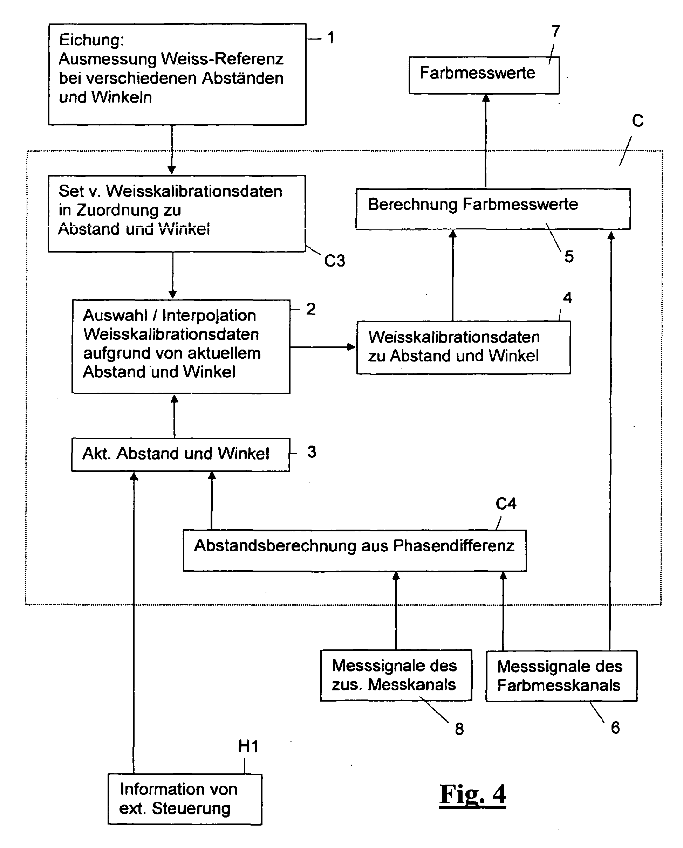

In Fig. 4 sind die einżelnen Schritte des erfindungsgemässen Verfahrens nochmals blockschematisch zusammengefasst. In Block 1 erfolgt die Ausmessung der Weissreferenz unter verschiedenen Abständen und Winkeln, woraus das Set von Weisskalibrationsdaten C3 resultiert. In Block 2 werden aus dem Set C3 aufgrund der Information 3 über aktuellen Abstand und Winkel die zugehörigen Weisskalibrationsdaten 4 ausgewählt bzw. berechnet. In Block 5 erfolgt die (konventionelle) Berechnung der Farbmessdaten 7 aus den Messsignalen 6 des Farbmesskanals und den Weissreferenzdaten 4. Die Information 3 über aktuellen Abstand und Winkel wird entweder als entsprechende Daten H 1 von einer übergeordneten Steuerung zugeführt oder in Block C4 aus den Phasenlagen der Messsignals 6 des Farbmesskanals und der Messsignale 8 des Reflex-Kanals berechnet.

Die vorstehend erläuterte Abstands/Winkelkorrektur kann für unterschiedliche Farbmessgeräte eingesetzt werden, z.B. Spektralfotometer, Colorimeter, Densitometer etc., und ist für Messungen an unterschiedlichen Substrat-Typen geeignet, z.B. Papier, Folien, Keramik, Stoff, Plastik Leder, etc..

Die Abstands/Winkelkorrektur kann auf verschiedenen Ebenen erfolgen: Entweder im Farbmessgerät bzw. dessen Steuerung selber oder in einer übergeordneten Einrichtung, z.B. einem Drucker oder einem Computer, an den das Farbmessgerät angeschlossen ist, oder in der Steuerung einer Messanordnung, in das das Farbmessgerät eingebaut ist.

Die erfindungsgemässe Abstands- und Winkelkorrektur kann selbstverständlich auch bei Farbmessgeräten eingesetzt werden, die durch spezielle Ausbildung der Beleuchtung bereits eine weitgehende Toleranz gegenüber Abstandsschwankungen aufweisen, so wie dies z.B. bei dem in der EP-A 1 507 134 (entsprechend US-Patentanmeldung Ser.No. 10/894797 vom 20.07.2004) beschriebenen Spektralfotometer der Fall ist. Dabei ist die abstandstolerante Ausbildung der Beleuchtungsanordnung zwar von Vorteil, weil dann die erforderlichen Korrekturen kleiner bleiben, sie ist jedoch keine Grundvoraussetzung.

Die vorstehenden Methoden zur Winkelkorrektur lassen sich auch im Falle von berührenden Messungen anwenden, wenn z.B. aus irgendwelchen Gründen Winkel und Abstand nicht optimal eingestellt werden können. Dies ist z.B. der Fall, wenn das Messgerät bzw. sein Messkopf auf einem Substrat rollt oder aufliegt und wegen unterschiedlicher Substratdicken vom Sollwert abweichende Winkellagen einnimmt (Nickbewegung des Messkopfs).

Mit der erfindungsgemässen Abstands- und Winkelkorrektur wird der Beleuchtungslichtabfall bei nicht nominellem Abstand/Winkel rechnerisch kompensiert und daher eine wesentliche Verbesserung der absoluten Messgenauigkeit erreicht. Zudem wird eine höhere Inter-Instrument-Genauigkeit erzielt, d.h. die Übereinstimmung der Messresultate von verschiedenen Farbmessgeräten unter identischen nicht optimalen Winkel- und Abstandkonditionen wird besser, da nicht alle Farbmessgeräte sich bei gleichen Abweichungen von der Nominal-Position gleich verhalten, was bedingt ist durch Fertigungsstreuungen, speziell durch Streuungen der Beleuchtung bei Verwendung von Leuchtdioden.

## Patentansprüche

1. Farbmessgerät (MD) mit einem Farbmesskanal (20,30) und einer Steuerung (C), welche aus den Messsignalen des Farbmesskanals (20, 30) und abgespeicherten Weisskalibrationsdaten Farbmesswerte bildet, wobei das Farbmessgerät Korrekturmittel aufweist, um die Farbmesswerte in Abhängigkeit von verschiedenen Abständen zum Messobjekt (M) zu berechnen und zu korrigieren,
**dadurch gekennzeichnet**
**dass** das Farbmessgerät zusätzlich Korrekturmittel aufweist, um die Farbmesswerte in Abhängigkeit von verschiedenen Winkeln zum Messobjekt (M) zu berechnen und zu korrigieren, und
**dass** die Korrekturmittel einen Satz von Weisskalibrationsdaten (C3) umfassen, die bei der Eichung des Farbmessgeräts (MD) unter definierten und bekannten Bedingungen für eine Anzahl unterschiedlicher Abstände (a) und Winkelpositionen (α) zu einer Weissreferenz (WT) bestimmt wurden.

2. Farbmessgerät nach Anspruch 1, **dadurch gekennzeichnet, dass** die Korrekturmittel dazu ausgebildet sind, für die Messwertberechnung aufgrund des bei der Messung vorliegenden Abstands (a) und Winkels (α) zum Messobjekt aus dem Satz von Weisskalibrationsdaten (C3) die dem vorliegenden Abstand und Winkel zugeordneten Weisskalibrationsdaten auszuwählen und für die Farbmesswertberechnung zu verwenden.

3. Farbmessgerät nach Anspruch 2, **dadurch gekennzeichnet, dass** die Korrekturmittel dazu ausgebildet sind, aus dem Satz von Weisskalibrationsdaten (C3) dem vorliegenden Abstand (a) und Winkel (α) zugeordnete Weisskalibrationsdaten durch Inter- bzw. Extrapolation zu berechnen und für die Farbmesswertberechnung zu verwenden.

4. Farbmessgerät nach Anspruch 3, **dadurch gekennzeichnet, dass** die Korrekturmittel dazu ausgebildet sind, die Information über vorliegenden Abstand (a) und Winkel (α) zum Messobjekt über eine Kommunikationsschnittstelle mitgeteilt zu erhalten.

5. Farbmessgerät nach einem der vorangehenden Ansprüche, **dadurch gekennzeichnet, dass** es Abstandsmessmittel (C4) zur Bestimmung des Abstands (a) zum Messobjekt aufweist.

6. Farbmessgerät nach Anspruch 5, **dadurch gekennzeichnet, dass** die Abstandsmessmittel (C4) einen zusätzlichen Messkanal mit einem eigenen Fotoempfänger (50) aufweisen.

7. Farbmessgerät nach Anspruch 6, **dadurch gekennzeichnet, dass** die Abstandsmessmittel (C4) dazu ausgebildet sind, den Abstand zum Messobjekt aufgrund der Phasendifferenz der Messsignalverläufe des zusätzlichen Messkanals (50) und des Farbmesskanals (20,30) zu bestimmen.

8. Farbmessgerät nach Anspruch 7, **dadurch gekennzeichnet, dass** der zusätzliche Messkanal (50) durch einen Glanzmesskanal gebildet ist.

9. Farbmessgerät nach einem der vorangehenden Ansprüche, **dadurch gekennzeichnet, dass** die Korrekturmittel durch die Steuerung (C) gebildet bzw. in dieser enthalten sind.

10. Farbmessverfahren, bei welchem ein Messobjekt mittels eines Farbmessgeräts (MD) fotoelektrisch ausgemessen wird und aus den Messsignalen des Farbmessgeräts in Verbindung mit abgespeicherten Weisskalibrationsdaten Farbmesswerte berechnet werden, wobei Farbmesswerte in Abhängigkeit von verschiedenen Abständen zum Messobjekt (M) berechnet und korrigiert werden,
**dadurch gekennzeichnet**
**dass** Farbmesswerte in Abhängigkeit von verschiedenen Winkeln zum Messobjekt (M) berechnet und korrigiert werden,
**dass** bei der Eichung des Farbmessgeräts (MD) unter definierten und bekannten Bedingungen für eine Anzahl unterschiedlicher Abstände (a) und Winkelpositionen (α) zu einer Weissreferenz (WT) ein Satz von Weisskalibrationsdaten (C3) bestimmt und abgespeichert wird, und
**dass** für die Farbmesswertberechnung aufgrund des bei der Messung vorliegenden Abstands (a) und Winkels (α) zum Messobjekt (M) aus dem Satz von Weisskalibrationsdaten (C3) die dem vorliegenden Abstand und Winkel zugeordneten Weisskalibrationsdaten ausgewählt und für die Farbmesswertberechnung verwendet werden.

11. Farbmessverfahren nach Anspruch 10, **dadurch gekennzeichnet, dass** die zu verwendenden, dem vorliegenden Abstand (a) und Winkel (α) zugeordneten Weisskalibrationsdaten aus dem Satz von Weisskalibrationsdaten (C3) durch Inter- bzw. Extrapolation berechnet werden.

12. Farbmessverfahren nach Anspruch 10 oder 11, **dadurch gekennzeichnet, dass** die Information über den vorliegenden Abstand (a) und Winkel (α) manuell oder von einer externen Steuerung (H) zugeführt wird.

13. Farbmessverfahren nach Anspruch 10 oder 11, **dadurch gekennzeichnet, dass** der vorliegende Abstand (a) zum Messobjekt gemessen wird.

14. Farbmessverfahren nach Anspruch 13, **dadurch gekennzeichnet, dass** zur Messung des vorliegenden Abstands (a) zum Messobjekt (M) die Messsignale von zwei Messkanälen (20,30; 50) des Farbmessgeräts (MD) zeitlich korreliert werden, wobei die Phasendifferenz zwischen den Messsignalen der beiden Messkanäle als Mass für den Abstand bestimmt und ausgewertet wird.

15. Farbmessverfahren nach Anspruch 14, **dadurch gekennzeichnet, dass** als Messkanäle ein Farbmesskanal (20,30) und ein Reflex-Kanal (50) des Farbmessgeräts (MD) verwendet werden.

## Claims

1. Colour measuring device (MD) with a colour measuring channel (20, 30) and a controller (C), which generates colour measurement values from the measurement signals of the colour measuring channel (20, 30) and stored white calibration data, and the colour measuring device has correcting means in order to calculate and correct the colour measurement values as a function of different distances from the measurement object (M),
**characterised in that**
the colour measuring device additionally has correcting means for calculating and correcting the measurement values as a function of different angles with respect to the measurement object (M), and
the correcting means comprise a set of white calibration data (C3) which was determined during calibration of the colour measuring device (MD) under defined and known conditions for a number of different distances (a) from and angular positions (α) with respect to a white reference (WT).

2. Colour measuring device as claimed in claim 1, **characterised in that**, in order to calculate the measurement values, the correcting means are configured to select from the set of white calibration data (C3) the white calibration data assigned to the actual distance and angle on the basis of the actual distance (a) and angle (α) from the measurement object ascertained during the measurement and use them to calculate the colour measurement values.

3. Colour measuring device as claimed in claim 2, **characterised in that** the correcting means are configured to calculate white calibration data assigned to the actual distance (a) and angle (α) from the set of white calibration data by interpolation and extrapolation and use it to calculate the colour measurement values.

4. Colour measuring device as claimed in claim 3, **characterised in that** the correcting means are configured to obtain the information about the actual distance (a) from and angle (α) with respect to the measurement object transmitted across a communication interface.

5. Colour measuring device as claimed in one of the preceding claims, **characterised in that** it has distance measuring means (C4) for determining the distance (a) from the measurement object.

6. Colour measuring device ass claimed in claim 5, **characterised in that** the distance measuring means (C4) has an additional measuring channel with a separate photoreceiver (50).

7. Colour measuring device as claimed in claim 6, **characterised in that** the distance measuring means (C4) are configured to determine the distance from the measurement object on the basis of the phase difference in the measurement signal curves of the additional measuring channel (50) and the colour measuring channel (20, 30).

8. Colour measuring device as claimed in claim 7, **characterised in that** the additional measuring channel (50) is provided in the form of a gloss measuring channel.

9. Colour measuring device as claimed in one of the preceding claims, **characterised in that** the correcting means are provided by the controller (C) and incorporated in it.

10. Colour measuring method whereby a measurement object is photo-electrically measured by means of a colour measuring device (MD) and colour measurement values calculated from the measurement signals of the colour measuring device in conjunction with stored white calibration data, and colour measurement values are calculated and corrected as a function of different distances from the measurement object (M),
**characterised in that**
colour measurement values are calculated and corrected as a function of different angles with respect to the measurement object (M),
and during calibration of the colour measuring device (MD) a set of white calibration data (C3) is determined under defined and known conditions for a number of different distances (a) and angular positions (α) with respect to a white reference (WT) and stored, and
in order to calculate the colour measurement values, the white calibration data assigned to the actual distance and angle is selected from the set of white calibration data (C3) on the basis of the actual distance (a) from and angle (α) with respect to the measurement object (M) during the measurement and used to calculate the colour measurement values.

11. Colour measuring method as claimed in claim 10, **characterised in that** the white calibration data assigned to the actual distance (a) and angle (α) which is used from the set of white calibration data (C3) is calculated by interpolation and extrapolation.

12. Colour measuring method as claimed in claim 10 or 11, **characterised in that** the information about the actual distance (a) and angle (α) is input manually or by an external controller (H).

13. Colour measuring method as claimed in claim 10 or 11, **characterised in that** the actual distance (a) from the measurement object is measured.

14. Colour measuring method as claimed in claim 13, **characterised in that**, in order to measure the actual distance (a) from the measurement object (M), the measurement signals from two measuring channels (20, 30; 50) of the colour measuring device (MD) are correlated on the basis of time, and the phase difference between the measurement signals from the two measuring channels is determined and evaluated as a measure of the distance.

15. Colour measuring method as claimed in claim 14, **characterised in that** a colour measuring channel (20, 30) and a reflex channel (50) of the colour measuring device (MD) are used as measuring channels.

## Revendications

1. Appareil de mesure de couleur (MC) avec un canal de mesure de couleur (20, 30) et une commande (C) qui détermine des valeurs de couleur à partir des signaux de mesure du canal de mesure de couleur (20, 30) et de données de calibrage du blanc enregistrées, l'appareil de mesure de couleur comprenant des moyens de correction pour calculer et corriger les valeurs de couleur en fonction de différentes distances par rapport à l'objet mesuré (M),
**caractérisé en ce que**
l'appareil de mesure de couleur comprend en outre des moyens de correction pour calculer et corriger les valeurs de couleur en fonction de différents angles par rapport à l'objet mesuré (M),
et
que les moyens de correction comportent un ensemble de données de calibrage du blanc (C3) qui ont été déterminées lors du calibrage de l'appareil de mesure de couleur (MD), dans des conditions définies et connues, pour un certain nombre de distances (a) et de positions angulaires (α) par rapport à une référence des blancs (WT).

2. Appareil de mesure selon la revendication 1, **caractérisé en ce que** les moyens de correction sont configurés pour sélectionner à partir de l'ensemble de données de calibrage du blanc (C3) et en se fondant sur la distance (a) et l'angle (α) par rapport à l'objet mesuré au moment de la mesure, les données de calibrage du blanc associées à la distance (a) et à l'angle (α) présents et pour les utiliser pour le calcul des valeurs de couleur.

3. Appareil de mesure selon la revendication 2, **caractérisé en ce que** les moyens de correction sont configurés pour calculer par interpolation ou extrapolation, à partir de l'ensemble de données de calibrage du blanc (C3), des données de calibrage du blanc associées à la distance (a) et à l'angle (α) présents et pour les utiliser pour le calcul des valeurs de couleur.

4. Appareil de mesure selon la revendication 3, **caractérisé en ce que** les moyens de correction sont configurés pour recevoir l'information concernant la distance (a) et l'angle (α) présents par rapport à l'objet mesuré via une interface de communication.

5. Appareil de mesure selon l'une quelconque des revendications précédentes, **caractérisé en ce qu'**il comporte des moyens de mesure de distance (C4) pour déterminer la distance (a) par rapport à l'objet mesuré.

6. Appareil de mesure selon la revendication 5, **caractérisé en ce que** les moyens de mesure de distance (C4) comportent un canal de mesure supplémentaire avec son propre récepteur optique (50).

7. Appareil de mesure selon la revendication 6, **caractérisé en ce que** les moyens de mesure de distance (C4) sont configurés pour déterminer la distance par rapport à l'objet de mesure en se fondant sur la différence de phase entre la courbe du signal de mesure du canal de mesure supplémentaire (50) et celle du canal de mesure de couleur (20, 30).

8. Appareil de mesure selon la revendication 7, **caractérisé en ce que** le canal de mesure supplémentaire (50) est formé par un canal de mesure de brillance.

9. Appareil de mesure selon l'une quelconque des revendications précédentes, **caractérisé en ce que** les moyens de correction sont constitués par ou contenus dans la commande (C).

10. Méthode de mesure de couleur, dans laquelle un objet mesuré est mesuré photoélectriquement au moyen d'un appareil de mesure de couleur (MD) et où des valeurs de couleur sont calculées à partir des signaux de mesure de l'appareil de mesure de couleur en combinaison avec des données de calibrage du blanc pré-enregistrées, des valeurs de couleur étant calculées et corrigées en fonction de différentes distances par rapport à l'objet mesuré (M),
**caractérisé en ce que**
des valeurs de couleur sont calculées et corrigées en fonction de différents angles par rapport à l'objet mesuré (M),
que lors du calibrage de l'appareil de mesure de couleur (MD), un ensemble de données de calibrage du blanc (C3) pour un certain nombre de distances (a) et de positions angulaires (α) par rapport à une référence des blancs (WT) est déterminé dans des conditions définies et connues et sauvegardé, et
que pour le calcul des valeurs de couleur, les données de calibrage du blanc associées à la distance et à l'angle présents sont sélectionnées à partir de l'ensemble de données de calibrage du blanc (C3) en se fondant sur la distance (a) et l'angle (α) par rapport à l'objet mesuré (M) au moment de la mesure, et sont utilisées pour le calcul des valeurs de couleur.

11. Méthode de mesure de couleur selon la revendication 10, **caractérisée en ce que** les données de calibrage du blanc associées à la distance (a) et l'angle (α) présents à utiliser sont calculées à partir de l'ensemble de données de calibrage du blanc (C3) par interpolation ou extrapolation.

12. Méthode de mesure de couleur selon les revendications 10 ou 11, **caractérisée en ce que** l'information concernant la distance (a) et l'angle (α) présents sont fournies manuellement ou par une commande externe (H).

13. Méthode de mesure de couleur selon les revendications 10 ou 11, **caractérisée en ce que** la distance (a) présente par rapport à l'objet mesuré est mesurée.

14. Méthode de mesure de couleur selon la revendication 13, **caractérisée en ce que** pour mesurer la distance (a) présente par rapport à l'objet mesuré (M), les signaux de mesure de deux canaux de mesure (20, 30 ; 50) de l'appareil de mesure de couleur (MD) sont corrélés dans le temps, la différence de phase entre les signaux de mesure des deux canaux de mesure étant déterminée et exploitée en tant que mesure de la distance.

15. Méthode de mesure de couleur selon la revendication 14, **caractérisée en ce qu'**un canal de mesure de couleur (20, 30) et un canal Reflex (50) de l'appareil de mesure de couleur (MD) sont utilisés comme canaux de mesure.
